# EUROPEAN PATENT APPLICATION

(11) **EP 4 671 085 A1**
(43) Date of publication of application: **31.12.2025**
(21) Application number: 23924129.2
(22) Date of filing: 26.07.2023
(51) Int. Cl.: B61L 27/12, G06Q 10/083

(54) **TIMETABLE CREATING DEVICE AND TIMETABLE CREATING METHOD**

(30) Priority: 21.02.2023 JP 2023024935
(71) Applicant: Hitachi, Ltd., Tokyo 100-8280 (JP)
(72) Inventor: TSUTSUMI Yuhi, Tokyo 100-8280 (JP); KIMURA Shota, Tokyo 100-8280 (JP); ADACHI Shingo, Tokyo 100-8280 (JP); OTSUKA Rieko, Tokyo 100-8280 (JP); TOMIYAMA Tomoe, Tokyo 100-8280 (JP); SATOU Yuuichi, Tokyo 100-8280 (JP)
(74) Representative: MERH-IP Matias Erny Reichl Hoffmann Patentanwälte PartG mbB
(86) International application number: PCT/JP2023/027311
(87) International publication number: WO 2024/176484

(57) **Abstract**

A timetable creating device according to an aspect of the present invention includes a schedule padding distribution deciding unit that distributes, to sections between stations, schedule padding in accordance with energy characteristics of traveling trains correlated with sections between stations, a change range storage unit that stores information of change ranges of arrival and departure times at each station, in which magnitude of effects on passenger convenience regarding changing trains is reflected, and a timetable creating unit that sets arrival and departure times at each station on the basis of the schedule padding distributed by the schedule padding distribution deciding unit. The schedule padding distribution deciding unit distributes, to sections between stations, schedule padding that enables the arrival and departure times at each station to be contained within the change range of arrival and departure times of each station.

## Description

### Technical Field

The present invention relates to a timetable creating device and a timetable creating method.

### Background Art

In recent years, energy saving (hereinafter, also referred to as energy-saving) has been required for railway train operation. The energy-saving effect in the operation of the train can be enhanced as more schedule padding for the required time for the train to travel through sections between stations is provided in the operation timetable. This is because, in a case where more schedule padding is provided, it is possible to perform a driving operation for realizing energy saving such as lowering the operation speed of the train and increasing coasting.

The magnitude of the energy-saving effect obtained by the provided schedule padding varies for sections between stations. Even in a case where the same schedule padding is provided, the obtained energy-saving effect is smaller, for example, in a section between stations with many up slopes or in a section between stations with many curves than the energy-saving effect obtained in a section between stations with many down slopes or in a section between stations with few curves.

Therefore, by performing adjustment such as distributing extra schedule padding to a section between stations having a high energy-saving effect and distributing less schedule padding to a section between stations having a low energy-saving effect, the energy-saving effect can be further improved without changing the required time of the entire line.

For example, Patent Literature 1 describes an operation control device including a required travel time estimation unit that estimates a required travel time from a current stop station to a next stop station and outputs a required travel time estimation value, a time allowance estimation unit that estimates a time allowance at the next step station and outputs a time allowance estimation value, and a travel speed adjustment unit that adjusts a travel speed on the basis of the required travel time estimation value and the time allowance estimation value. According to the technology described in Patent Literature 1, it is possible to obtain an effect that traveling energy of a train can be reduced without causing disturbance of operation.

### Citation List

### Patent Literature

Patent Literature 1: JP 6047827 B2

### Summary of Invention

### Technical Problem

However, there is a possibility that the train passenger convenience is lowered by distributing extra schedule padding to sections between stations having a high energy-saving effect. For example, in a case where the arrival time of a connected station in the middle of the line is changed by distributing extra schedule padding thereto, there is a possibility that a problem such as poor transfer connection to another line or uneven train intervals occurs.

Patent Literature 1 describes correcting a run curve while a train is traveling through sections between stations, but does not disclose a method for preventing occurrence of the above problem.

The present invention has been made in view of the above circumstances, and an object of the present invention is to enhance an energy-saving effect in traveling of a train without lowering train passenger convenience.

### Solution to Problem

A timetable creating device according to an aspect of the present invention includes: a schedule padding distribution deciding unit that distributes, to sections between stations, schedule padding in accordance with energy characteristics of traveling trains correlated with sections between stations; a change range storage unit that stores information of change ranges of arrival and departure times at each station, in which magnitude of effects on passenger convenience regarding changing trains is reflected; and a timetable creating unit that sets arrival and departure times at each station on the basis of the schedule padding distributed by the schedule padding distribution deciding unit. The schedule padding distribution deciding unit distributes, to sections between stations, schedule padding that enables the arrival and departure times at each station to be contained within the change range of arrival and departure times of each station stored in the change range storage unit.

### Advantageous Effects of Invention

According to at least one aspect of the present invention, it is possible to enhance an energy-saving effect in traveling of a train without lowering train passenger convenience.

Problems, configurations, and effects other than those described above will be clarified by the following description of embodiment.

### Brief Description of Drawings

Fig. 1 is a diagram illustrating a configuration example of a control system of an operation management system according to an embodiment of the present invention.
Fig. 2 is a block diagram illustrating a hardware configuration example of a timetable creating device and an operation management device constituting the operation management system according to an embodiment of the present invention.
Fig. 3 is a diagram illustrating a configuration example of a timetable according to an embodiment of the present invention.
Fig. 4 is a graph illustrating an example of energy characteristics set to sections between stations according to an embodiment of the present invention.
Fig. 5 is a diagram illustrating an example of change ranges of arrival and departure times of the train at each station according to an embodiment of the present invention.
Fig. 6 is a diagram illustrating a distribution example of schedule padding according to an embodiment of the present invention.
Fig. 7 is a flowchart illustrating an example of a procedure of timetable creating processing by the timetable creating device according to an embodiment of the present invention.

### Description of Embodiment

Hereinafter, examples of modes for carrying out the present invention (hereinafter, referred to as "embodiment") will be described with reference to the accompanying drawings. The present invention is not limited to the embodiment, and various numerical values and the like in the embodiment are examples. In the present specification and the drawings, the same components or components having substantially the same function are denoted by the same reference numerals, and redundant description is omitted.

### <Configuration of operation management system>

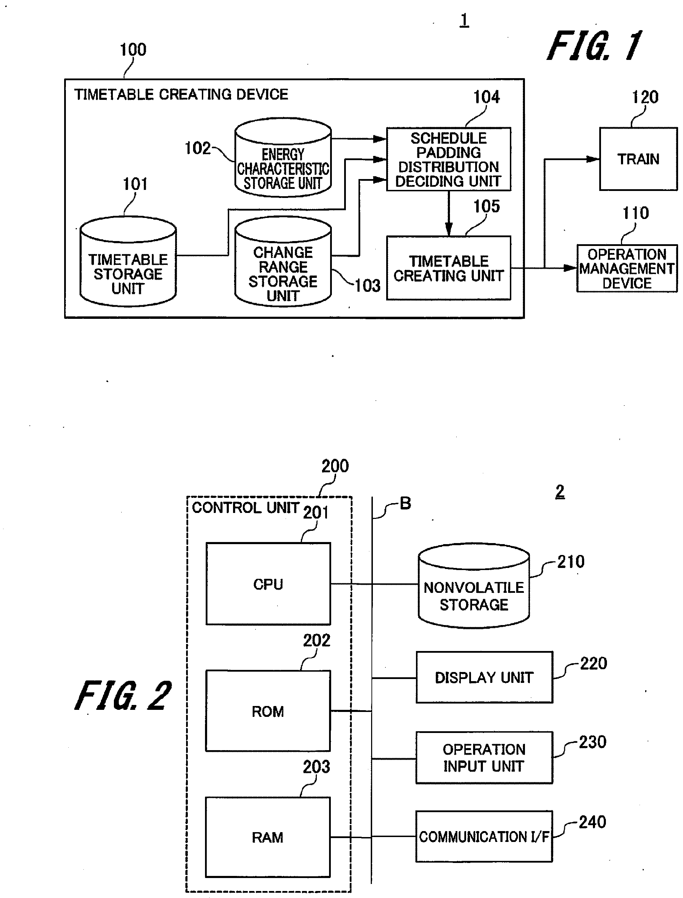

First, a configuration of an operation management system according to an embodiment of the present invention will be described with reference to Fig. 1. Fig. 1 is a diagram illustrating a configuration example of a control system of an operation management system 1 according to an embodiment of the present invention.

As illustrated in Fig. 1, the operation management system 1 includes a timetable creating device 100, an operation management device 110, and a train 120.

The timetable creating device 100 includes a timetable storage unit 101, an energy characteristic storage unit 102, a change range storage unit 103, a schedule padding distribution deciding unit 104, and a timetable creating unit 105.

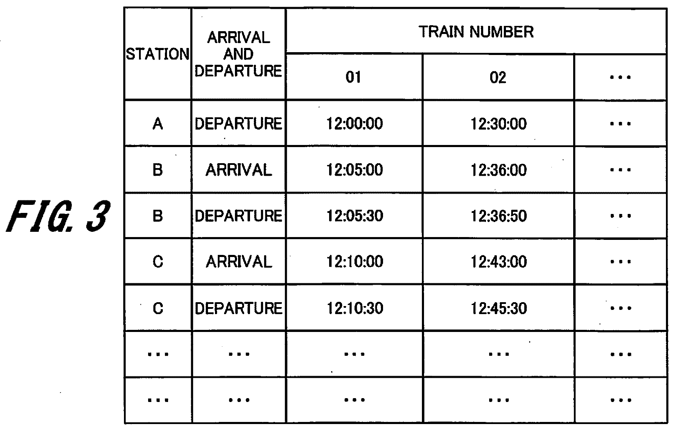

In the timetable storage unit 101, an existing operation timetable (hereinafter, also simply referred to as timetable), which is defined in the current schedule and is the time at which the train arrives at and departs from each station, is stored in association with the train number assigned to each train. The existing timetable stored in the timetable storage unit 101 will be described in detail with reference to Fig. 3 described later.

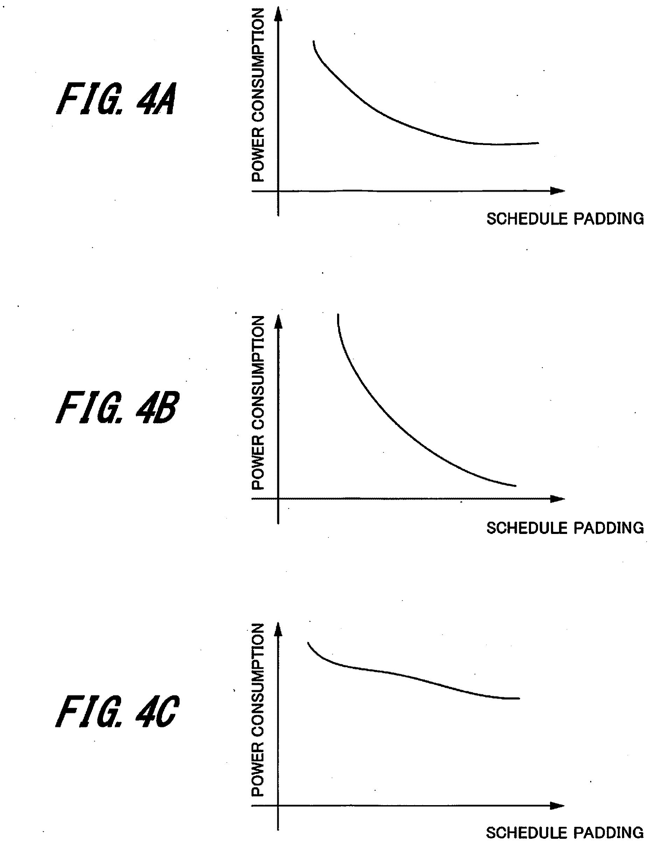

In the energy characteristic storage unit 102, characteristics of energy (hereinafter, also referred to as energy characteristics) required by a train traveling through sections between stations are stored in association with the sections between the stations. In the present embodiment, the energy characteristics are indicated by the correspondence between the power consumption of the train traveling through sections between stations and the magnitude of the schedule padding provided to the sections between stations. The schedule padding indicates a time obtained by subtracting the fastest traveling time from the traveling time of the section between stations determined by the timetable. The fastest traveling time is a traveling time when the train travels through the section between stations at the fastest speed. The energy characteristics of the train will be described in detail with reference to Fig. 4 described later.

The change range storage unit 103 stores information on the change ranges of the arrival and departure times of each station reflecting the magnitude of effects on the passenger convenience. The change ranges of the arrival and departure times of each station are information to be referred to when the schedule padding distribution deciding unit 104 to be described later distributes the schedule padding to sections between stations. In a case where the arrival time or the departure time of the train at the station, which is decided on the basis of the schedule padding distributed by the schedule padding distribution deciding unit 104, exceeds the change ranges of the arrival and departure times, the schedule padding distribution deciding unit 104 does not distribute the schedule padding to the station. That is, the schedule padding distribution deciding unit 104 distributes the schedule padding within the range satisfying the change ranges of the arrival and departure times stored in the change range storage unit 103 to the target sections between stations.

The effects on passenger convenience are indicated by, for example, an index such as whether a sufficient time is secured when passengers change trains at a station constituting sections between stations to which the schedule padding is distributed, whether the train intervals are uniform, and whether the station is a station connected to another transportation system. Alternatively, as the effects on passenger convenience, an index such as the degree of congestion with passengers at the station, whether there is a place where passengers can stay during a waiting time of a train, such as a waiting place, a commercial facility, or a telework facility, whether the timetable is set according to a starting time or a finishing time of schools, companies, or the like in the vicinity of the station, whether the timetable is set according to a train arrival frequency of another line of a transfer destination, or the like may be considered.

In addition, the change range storage unit 103 stores a change range of the arrival and departure times of the train at each station defined in consideration of passenger convenience. For example, it is assumed that the change ranges of the arrival and departure times of the train are large at a station without transfer, and the change ranges of the arrival and departure times of the train are small at a station with a connection to another line such as a main station in the middle of the line. As a result, for example, it is possible to prevent extra schedule padding more than is needed from being distributed to sections between stations including a station connected to another line. Therefore, it is possible to prevent the occurrence of a situation in which the timetable reset on the basis of the schedule padding is changed for the worse in a direction of reducing the transfer time of the passenger.

The change ranges of the arrival and departure times of the train at each station can be mechanically decided by a control unit 200 (see Fig. 2) of the timetable creating device 100 after quantitatively calculating the effects on the passenger convenience, for example. Alternatively, a value decided by a user such as a manager of an operating company on the basis of experience may be set as the change ranges of the arrival and departure times of the train.

In addition, the change ranges of the arrival and departure times of the train at each station may be set on the basis of the people flow data of the passengers at the target station. For example, in a station with a large flow of people, the change ranges of the arrival and departure times of the train may be set to be small.

In addition, the change ranges of the arrival and departure times of the train at each station may be set to different ranges according to the usage status of the passengers indicated by the train number, the usage time zone, the usage date, and the like. For example, the change ranges of the arrival and departure times of the train at each station may be set to be wide in an off time zone in the daytime, and the change range of the arrival and departure times of the train at each station may be set to be narrow (small) in a rush time zone in the morning or the evening.

The schedule padding distribution deciding unit 104 distributes (redistributes) the schedule padding in the entire line (for all stations) obtained on the basis of the existing timetable read from the timetable storage unit 101 to each section between stations constituting the line. More specifically, the schedule padding distribution deciding unit 104 decides the amount of the schedule padding to be distributed to sections between stations so as to satisfy the change ranges of the arrival and departure times of each station read from the change range storage unit 103 on the basis of the information of the energy characteristics of sections between stations read from the energy characteristic storage unit 102.

The timetable creating unit 105 creates a revised timetable in which the sum of the schedule padding distributed to sections between stations and the fastest traveling time through sections between stations is set as a target traveling time through sections between stations, and transmits the timetable to the operation management device 110 and the train 120.

The operation management device 110 operates the train 120 according to the timetable created by the timetable creating unit 105. In addition, the operation management device 110 controls the course of each train to each station by controlling the direction of a railway point (not illustrated) so that the train 120 can travel to a designated track.

The train 120 travels according to the timetable created by the timetable creating unit 105 so as to satisfy the target traveling time under the control of the operation management device 110.

### <Hardware configuration example of computing machine>

Next, a hardware configuration of each device for realizing the function of the control system of the operation management system 1 illustrated in Fig. 1 will be described with reference to Fig. 2.

Fig. 2 is a block diagram illustrating a hardware configuration example of the timetable creating device 100 and the operation management device 110 constituting the operation management system 1. A computing machine 2 illustrated in Fig. 2 is hardware used as a so-called computer.

The computing machine 2 includes a control unit 200, a nonvolatile storage 210, a display unit 220, an operation input unit 230, and a communication interface (I/F) 240 each connected to a bus B.

The control unit 200 includes a central processing unit (CPU) 201, a read only memory (ROM) 202, and a random access memory (RAM) 203.

The CPU 201 reads a program code of software for realizing each function according to the present embodiment from the ROM 202, develops the program code in the RAM 203, and executes the program code. Note that the computing machine 2 may include a processing device such as a micro-processing unit (MPU) instead of the CPU 201. Variables, parameters, and the like generated during arithmetic processing are temporarily written to the RAM 203.

As the nonvolatile storage 210, for example, a hard disk drive (HDD), a solid state drive (SSD), a flexible disk, an optical disk, a magneto-optical disk, a CD-ROM, a CD-R, a nonvolatile memory card, or the like can be used. In addition to an operating system (OS) and various parameters, a program for causing the computing machine 2 to function, and the like are recorded in the nonvolatile storage 210. Note that the program may be stored in the ROM 202.

The program is stored in the form of a computer-readable program code, and the CPU 201 sequentially executes an operation according to the program code. That is, the ROM 202 or the nonvolatile storage 210 is used as an example of a computer-readable non-transitory recording medium storing a program to be executed by a computer.

The functions of the schedule padding distribution deciding unit 104 and the timetable creating unit 105 of the timetable creating device 100 are implemented by the CPU 201 reading the corresponding program code from the ROM 202 or the nonvolatile storage 210, developing the program code in the RAM 203, and executing the program code.

In addition, each function of the timetable storage unit 101, the energy characteristic storage unit 102, and the change range storage unit 103 of the timetable creating device 100 is realized by the nonvolatile storage 210 or the ROM 202.

The display unit 220 is, for example, a monitor including a liquid crystal display (LCD) or the like, and displays a result of processing performed by the computing machine 2 or the like.

The operation input unit 230 includes, for example, a keyboard, a mouse, a touch sensor, and the like, generates an operation signal according to an operation by the user, and supplies the operation signal to the CPU 201.

Note that the display unit 220 and the operation input unit 230 may be integrally configured as a touch panel. In addition, the computing machine 2 may be configured not to include the display unit 220 and the operation input unit 230.

For example, a network interface card (NIC) or the like is used as the communication I/F 240, and various data can be transmitted and received to and from an external device or the train 120 via a network or a communication line.

### <Configuration of timetable>

Next, a configuration of an existing timetable stored in the timetable storage unit 101 (see Fig. 1) will be described with reference to Fig. 3. Fig. 3 is a diagram illustrating a configuration example of a timetable.

In the timetable, the arrival and departure times of each station are defined for each train number. As illustrated in Fig. 3, the timetable includes items of "station", "arrival and departure", and "train number".

In the item "station", a name, an identification number, and the like of each station is stored. In the example illustrated in Fig. 3, names of stations such as "A" and "B" are stored in the item of "station".

In the item of "arrival and departure", information of "departure" indicating departure or "arrival" indicating arrival is stored. With the information of "departure" or "arrival" stored in this item, it is possible to identify whether the time associated with each train number in the item of "train number" is the departure time from the corresponding station or the arrival time of the train.

The item "train number" stores the departure time from the corresponding station or the arrival time to the station of each train identified by the train number.

For example, the uppermost row of the timetable indicates that the time at which the train with the train number "01" departs from a station A is "12:00:00", and the time at which the train with the train number "02" departs from the A station is "12:30:00".

In addition, the second row from the top of the timetable indicates that the time at which the train with the train number "01" arrives at a station B is "12:05:00", and the time at which the train with the train number "02" arrives at the B station is "12:36:00".

### <Example of energy characteristics>

Next, an example of energy characteristics set to sections between stations will be described with reference to Fig. 4. Figs. 4A to 4C are graphs illustrating an example of energy characteristics set to sections between stations. In the graph illustrated in Fig. 4, the vertical axis represents the power consumption of a train traveling through sections between stations, and the horizontal axis represents schedule padding provided to the sections between stations. As can be seen from the graph, the power consumption of the train traveling through sections between stations decreases as the schedule padding provided to the sections between stations increases.

The energy characteristics of the train indicated by the correspondence between the power consumption of the train and the schedule padding are different for sections between stations. For example, as illustrated in Fig. 4B, there is a section between stations having an energy characteristic in which the gradient of the curve of the graph is steep, that is, an energy characteristic in which the reduction amount of the power consumption with respect to the provided schedule padding is large. It can be said that such an energy characteristic is a characteristic excellent in energy saving. On the other hand, as illustrated in Fig. 4C, there is a section between stations having an energy characteristic in which the gradient of the curve of the graph is gentle, that is, an energy characteristic in which the reduction amount of the power consumption with respect to the provided schedule padding is small.

As the sections between stations having energy characteristics excellent in energy saving, for example, sections between stations with a large downward gradient, sections between stations with few curves, sections between stations with a long inter-station distance, sections between stations with a high speed limit, sections between stations with a uniform speed limit, and the like are assumed. The schedule padding distribution deciding unit 104 (see Fig. 1) distributes more schedule padding to sections between stations having such energy characteristics excellent in energy saving.

The energy characteristics associated with sections between stations are calculated in advance. Note that the energy characteristics may be obtained by a method other than calculation. For example, it may be created based on the data of the power consumption indicated in the travel result actually measured by a driver. However, since the power consumption indicated in the travel result is assumed to include variations depending on the driver, it is desirable to use a representative value extracted from the power consumption in the actually measured travel result in the calculation of the energy characteristic.

As the representative value, it is conceivable to use an average value, a median value, a mode value, and the like. Alternatively, an approximate curve may be created from each value, and the approximate curve may be used as the energy characteristic. In this case, considering that the relationship between the schedule padding and the power consumption is generally a property of monotonically decreasing, that is, a property of decreasing the power consumption as the schedule padding increases, a monotonically decreasing approximate curve formula may be hypothetically generated.

In the case of calculating the energy characteristic from the actual measurement result, the possibility that the energy characteristic can be accurately calculated becomes higher as the number of samples of the actual measurement result is larger, that is, the possibility that the schedule padding can be accurately distributed becomes higher. Therefore, when a new actual measurement result is obtained, the energy characteristic may be updated using the result. In addition, an actual measurement result having a large difference from the representative value may be excluded as an outlier and then an energy characteristic may be created.

Furthermore, in order to accurately calculate the energy characteristic, a condition of the minimum required number of samples of the actual measurement result may be set in advance, and the energy characteristic may be calculated using only the actual measurement result satisfying the condition. As a method of setting the condition of the minimum required number of samples, for example, a method of setting the number of data in which the approximate curve created from each value of the actual measurement result monotonously decreases as the condition of the minimum required number of samples is conceivable.

In addition, the energy characteristic referred to at the time of distribution of the schedule padding may be switched for each driver who drives the train.

Note that, in the example illustrated in Fig. 4, an example in which the energy characteristic is set to each section between stations has been illustrated, but the present invention is not limited thereto. The energy characteristics may be set to sections between stations including a non-stop station, that is, a section between a stop station and a non-stop station, a section between a non-stop station and a non-stop station, or a section between a non-stop station and a stop station. In the energy characteristics a section between a stop station and a stop station, since both the traveling start speed and the traveling end speed of the sections between the stations are fixed at a speed of 0 km/h, the energy characteristic of the sections between the stations is uniquely determined, and only one energy characteristic is created.

On the other hand, in sections between stations including non-stop stations, the passing speed at the non-stop stations is not uniquely determined, and thus a plurality of energy characteristics to be created are generated corresponding to the passing speeds at the non-stop stations. In addition, in the case of targeting sections between stations including non-stop stations, the energy characteristic of sections between stations may be created and stored for each speed at the non-stop station.

### <Change ranges of arrival and departure times of train at each station>

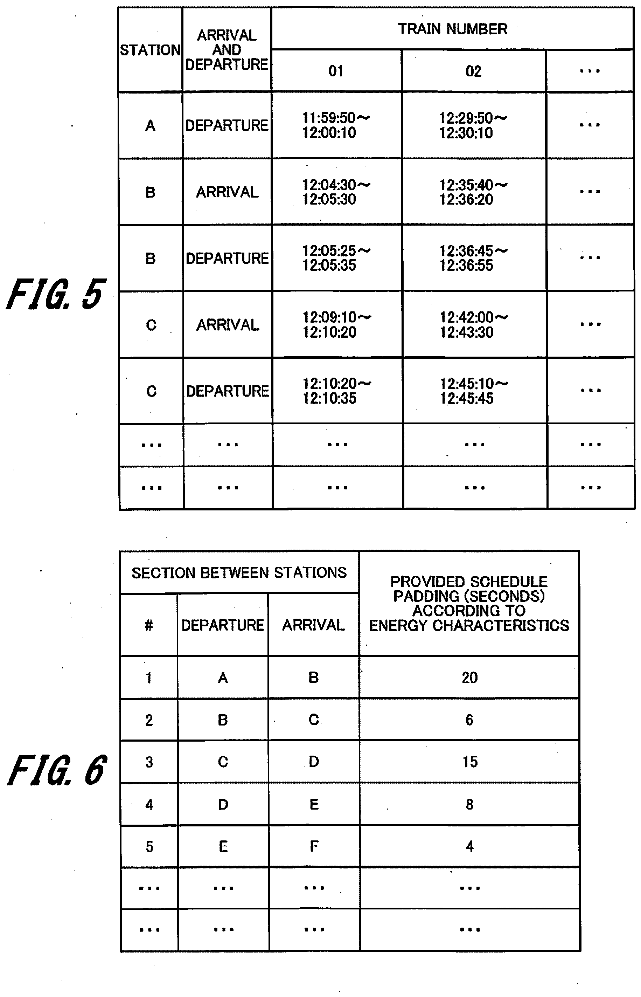

Next, change ranges of the arrival and departure times of the train at each station will be described with reference to Fig. 5. Fig. 5 is a diagram illustrating an example of change ranges of arrival and departure times of the train at each station.

As illustrated in Fig. 5, the information on the change ranges of the arrival and departure times of the train includes items of "station", "arrival and departure", and "train number". Since the respective items of "station" and "arrival and departure" are the same as those in the timetable shown in Fig. 3, the description thereof will be omitted.

In the item of "train number", a change range of departure or arrival time of a train that departs from or arrives at each station is stored. For example, the uppermost record in Fig. 5 indicates that the change range of the time when the train with the train number "01" departs from the station A is from 11:59:50 to 12:00:10.

In a case where the departure time or the arrival time of the train at the station is later than the upper limit of the set change range by distributing the schedule padding to the target station, the schedule padding distribution deciding unit 104 (see Fig. 1) does not distribute the schedule padding planned to be distributed to the station. That is, the schedule padding distribution deciding unit 104 distributes only the schedule padding not exceeding the preset change range to the station as a distribution target.

As described above, the change ranges of the arrival and departure times of the train set to each station reflect the effects on the passenger convenience. For example, it is assumed that the change ranges of the arrival and departure times are set to be small in a station having a large influence on the passenger convenience due to a timetable change, such as a station connected to another line. Therefore, in a station having large effects on passenger convenience, it is possible to prevent changing for the worse or the like of a timetable due to the distribution of the schedule padding.

### <Distribution example of schedule padding>

Next, a distribution example of the schedule padding by the schedule padding distribution deciding unit 104 will be described with reference to Fig. 6. Fig. 6 is a diagram illustrating a distribution example of schedule padding. The table illustrated in Fig. 6 includes items of "section between stations" and "provided schedule padding (seconds)". The item "section between stations" includes a serial number (#) assigned to sections between stations and information on a departure station and an arrival station. Then, in the table illustrated in Fig. 6, the sections between stations are associated with the schedule padding (provided schedule padding) distributed by the schedule padding distribution deciding unit 104.

For example, in the table illustrated in Fig. 6, it is indicated that the schedule padding provided to the section between the station A and the station B managed by the number "1" is 20 seconds, the schedule padding provided to the section between the station B and a station C managed by the number "2" is 6 seconds, and the schedule padding provided to the section between the station C and a station D managed by the number "3" is 15 seconds.

The section between the station A and the station B, the section between the station C and the station D, and the like, which are provided with more schedule padding, are sections between stations having energy characteristics excellent in energy saving. That is, by distributing more schedule padding, it is possible to expect a reduction in the power consumption of the train traveling through the section between the stations. Therefore, according to the present embodiment, the schedule padding is appropriately distributed according to the energy characteristics during train traveling through sections between stations, and thus energy saving can be efficiently achieved.

Note that, in a case where the energy characteristic is also set for sections between stations including the non-stop station, and there are a plurality of energy characteristics for each passing speed at the non-stop station between the stations, the schedule padding distribution deciding unit 104 can decide the distribution of the schedule padding by using the plurality of energy characteristics. Specifically, the schedule padding distribution deciding unit 104 can distribute the schedule padding according to the energy characteristic for each passing speed at the non-stop station, and then decide the distribution result in which the power consumption of the train is the smallest among them, that is, the passing speed of the non-stop station in which the power consumption is the smallest and the distribution of the schedule padding. However, in this method, as the number of non-stop stations or the number of passing speeds at non-stop stations increases, the number of calculations rapidly increases exponentially and the calculation load increases. Therefore, an approximate solution may be obtained using a combination optimization method such as a local search method or a greedy method, and the approximate solution may be used as a distribution result.

### <Timetable creating processing by timetable creating device>

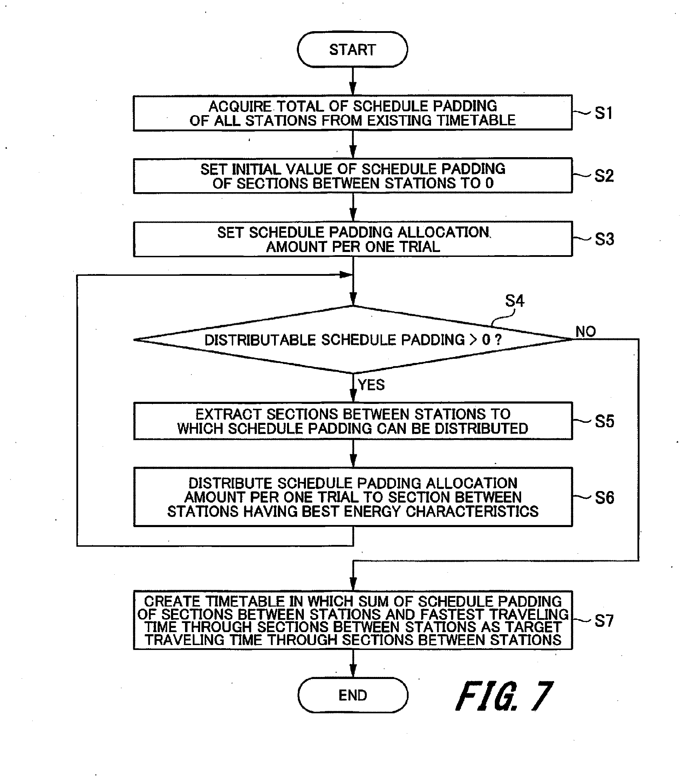

Next, timetable creating processing by the timetable creating device 100 according to the present embodiment will be described with reference to Fig. 7. Fig. 7 is a flowchart illustrating an example of a procedure of timetable creating processing by the timetable creating device 100.

First, the schedule padding distribution deciding unit 104 acquires the total of the schedule padding of all stations constituting the line from the existing timetable stored in the timetable storage unit 101 (see Fig. 1) (step S1). Specifically, the schedule padding distribution deciding unit 104 calculates the schedule padding for each section between stations by subtracting the fastest traveling time from the traveling time of each section between stations defined by the timetable, and adds up the calculated schedule padding for all stations. Note that the fastest traveling time may be calculated in advance and held as data, or may refer to a value calculated on the train in real time.

Next, the schedule padding distribution deciding unit 104 sets an initial value of the schedule padding associated with each section between stations to "0" (step S2). Next, the schedule padding distribution deciding unit 104 sets an allocation amount of the schedule padding per one trial (step S3).

In the present embodiment, the schedule padding distribution deciding unit 104 distributes the schedule padding of the predetermined allocation amount to each section between stations dividedly into several times until there is no more schedule padding to distribute. That is, one trial means one time out of the schedule padding distribution performed dividedly into several times. When the allocation amount per one trial is set to, for example, one second which is the number of seconds as the minimum unit of operation, the schedule padding can be distributed with the highest accuracy, but this setting may be an arbitrary value according to the required accuracy.

Next, the schedule padding distribution deciding unit 104 determines whether or not the distributable schedule padding is more than "0" (step S4). In the first determination in step S4, the distributable schedule padding has the same value as the sum of the schedule padding for all stations acquired in step S1. If it is determined in step S4 that there is distributable schedule padding (YES in step S4), the schedule padding distribution deciding unit 104 extracts sections between stations to which the schedule padding can be distributed (step S5).

The sections between stations to which the schedule padding can be distributed are sections between stations in which the arrival time or the departure time of the train to the station decided on the basis of the schedule padding distributed by the schedule padding distribution deciding unit 104 is contained within the change ranges of the arrival and departure times. Next, the schedule padding distribution deciding unit 104 distributes the schedule padding of the allocation amount per one trial defined in step S3 to a section between stations having the best energy characteristics among the sections between stations extracted in step S5 (step S6).

In a case where the arrival and departure times of the station exceeds a preset change range of the arrival and departure times by distributing the schedule padding of the allocation amount per one trial, the section between stations including the station is not extracted as the section between stations to which the schedule padding can be distributed in step S5. In this case, what is extracted in step S5 is the section between stations having the second most excellent energy characteristic after the section between stations to which the schedule padding has been distributed in step S6.

That is, according to the present embodiment, more schedule padding is distributed to the sections between stations having more excellent energy characteristics. Therefore, more efficient energy saving can be achieved.

After the processing of step S6, the schedule padding distribution deciding unit 104 returns to step S4 and makes a determination. That is, the determination in step S4 and the processing in steps S5 and S6 are repeatedly performed until the distributable schedule padding becomes "0". That is, the schedule padding becomes "0" when distribution of the schedule padding to all the sections between stations to which the schedule padding can be distributed is completed.

If it is determined in step S4 that the distributable schedule padding is "0" (NO in step S4), the timetable creating unit 105 (see Fig. 1) creates a timetable (revised timetable) in which the sum of the schedule padding distributed to sections between stations and the fastest traveling time through sections between stations is set as the target traveling time through sections between stations (step S17). After the processing of step S17, the timetable creating processing by the timetable creating device 100 ends.

Note that, in the example illustrated in Fig. 7, an example has been described in which the allocation amount of the schedule padding per one trial is defined in advance, and the schedule padding is distributed to target sections between stations dividedly into several times. However, the present invention is not limited thereto. The distribution amount corresponding to each section between stations decided based on the energy characteristics of the sections between stations and the information on the change ranges of the arrival and departure times at each station may be distributed once or dividedly into several times.

According to the above-described embodiment, the schedule padding is distributed within the change ranges of the arrival and departure times of each station reflecting the magnitude of effects on the transfer convenience, and the timetable is set (reset) based on the distributed schedule padding. Therefore, in the above-described embodiment, it is possible to improve the energy saving while preventing the deterioration of the passenger convenience.

In addition, in the above-described embodiment, the schedule padding distribution deciding unit 104 acquires a total of time at all stations obtained by subtracting the fastest traveling time from the schedule padding defined in the existing timetable, that is, the traveling time through sections between stations defined by the timetable, and redistributes the acquired schedule padding of all sections between stations to each section between stations. That is, since it is not necessary to newly add a necessary schedule padding to the entire line, it is not necessary to perform complicated adjustment or the like for generating new schedule padding. In addition, it is also possible to prevent deterioration of passenger convenience due to adjustment for generating new schedule padding.

In addition, the above-described embodiment describes the configurations of the devices and the systems in detail and specifically in order to describe the present invention in an easy-to-understand manner, and is not necessarily limited to that having all the described configurations.

In addition, the control lines and the information lines indicated by solid lines and arrows in Figs. 1 and 2 indicate what is considered to be necessary for the description, and do not necessarily indicate all the control lines and the information lines on the product. In practice, it may be considered that almost all the configurations are connected to each other.

In addition, in the present specification, the processing steps describing the time-series processing include not only processing performed in time series according to the described order, but also processing executed in parallel or individually (for example, parallel processing or processing by an object) even if the processing is not necessarily performed in time series.

In addition, each component of the operation management system according to one embodiment of the present disclosure described above may be implemented in any hardware as long as the hardware can transmit and receive information to and from each other via a network. In addition, the processing performed by a certain processing unit may be realized by one piece of hardware or may be realized by distributed processing by a plurality of pieces of hardware.

### Reference Signs List

- 1: Operation management system
- 100: Timetable creating device
- 101: Timetable storage unit
- 102: Energy characteristic storage unit
- 103: Change range storage unit
- 104: Schedule padding distribution deciding unit
- 105: Timetable creating unit
- 110: Operation management device
- 200: Control unit

## Claims

1. A timetable creating device comprising:
a schedule padding distribution deciding unit that distributes, to sections between stations, schedule padding in accordance with energy characteristics of traveling trains correlated with the sections between stations;
a change range storage unit that stores information of change ranges of arrival and departure times at each of the stations, in which magnitude of effects on passenger convenience regarding changing the trains is reflected; and
a timetable creating unit that sets arrival and departure times at each of the stations on the basis of the schedule padding distributed by the schedule padding distribution deciding unit, wherein
the schedule padding distribution deciding unit distributes, to the sections between stations, schedule padding that enables the arrival and departure times at each of the stations to be contained within the change ranges of the arrival and departure times of each of the stations stored in the change range storage unit.

2. The timetable creating device according to claim 1, wherein
the schedule padding distribution deciding unit acquires a total of schedule padding that has been set to the sections between stations in an existing timetable and redistributes the total of the schedule padding acquired to the sections between stations.

3. The timetable creating device according to claim 2, wherein
the schedule padding distribution deciding unit distributes the schedule padding more to a section between stations in which the energy characteristic is more excellent.

4. The timetable creating device according to claim 3, wherein
the energy characteristic is indicated by a relationship between the schedule padding allocated to the sections between stations and power consumption of the train in a case where the train travels through the sections between stations on the basis of the schedule padding.

5. The timetable creating device according to claim 4, wherein
the energy characteristic is indicated by a curve in a graph in which the schedule padding allocated to each section between stations is set as a first axis and the power consumption of the train in the case where the train travels through the section between stations on the basis of the schedule padding is set as a second axis different from the first axis, and
a section between stations in which the energy characteristic is more excellent is a section between stations in which the curve has a steeper gradient.

6. The timetable creating device according to claim 3, wherein
the convenience reflected in the change ranges of the arrival and departure times at each of the stations is indicated by any one or more of indexes including whether a sufficient time is secured when the passenger changes the train at a distribution target station of the schedule padding, whether a train interval at the distribution target station is uniform, and whether the distribution target station is a station to which another transportation system is connected.

7. The timetable creating device according to claim 3, wherein
the change ranges of the arrival and departure times are set according to any one or more of a type of the train, a time zone in which the train travels, and a date and time on which the train travels.

8. The timetable creating device according to claim 3, wherein
the change ranges of the arrival and departure times are decided on the basis of people flow data of passengers at the distribution target station of the schedule padding.

9. A timetable creating method comprising:
a schedule padding distribution deciding procedure of distributing, to sections between stations, schedule padding in accordance with energy characteristics of traveling trains correlated with the sections between stations;
a procedure of storing, in a change range storage unit, information of change ranges of arrival and departure times at each of the stations, in which magnitude of effects on passenger convenience regarding changing the trains is reflected; and
a timetable creating procedure of setting arrival and departure times at each of the stations on the basis of the schedule padding distributed by the schedule padding distribution deciding procedure, wherein
the schedule padding distribution deciding procedure distributes, to sections between stations, schedule padding that enables the arrival and departure times at each of the stations to be contained within the change range of arrival and departure times of each of the stations stored in the change range storage unit.
